# FASCICULE DE BREVET EUROPEEN

(11) **EP 3 944 884 B1**
(45) Date de publication et mention de la délivrance du brevet: **06.08.2025**
(21) Numéro de dépôt: 21182791.0
(22) Date de dépôt: 30.06.2021
(51) Int. Cl.: B01D 29/27, E04H 4/12

(54) **FILTRE BICOUCHE**
ZWEISCHICHTFILTER
TWO-LAYER FILTER

(30) Priorité: 31.07.2020 FR 2008196
(43) Date de publication de la demande: 02.02.2022
(73) Titulaire: Deltaval, 69006 Lyon (FR); MDB Texinov, 38110 Saint Didier de la Tour (FR)
(72) Inventeur: TANKERE, Jacques, 01800 MEXIMIEUX (FR)
(74) Mandataire: Ipsilon Lyon

(56) Documents cités:
- EP-A1- 1 108 457
- EP-A2- 1 640 050
- US-A- 4 460 468
- US-A- 4 701 259
- US-A- 4 818 398
- US-A- 5 417 855
- US-B2- 9 999 849

## Description

### DOMAINE DE L'INVENTION

L'invention s'inscrit dans le domaine des filtres, et peut en particulier être appliquée aux filtres à eau, notamment pour les piscines.

L'invention vise plus particulièrement à faciliter l'entretien et le remplacement des filtres, tout en proposant un filtre du type en question répondant davantage aux exigences écologiques, par une conception qui permet le remplacement d'une partie du filtre à chaque usage, ce composant pouvant être lui-même biodégradable ou biocompostable.

### ART ANTERIEUR

La filtration est un traitement mécanique qui permet de nettoyer un fluide en particulier l'eau, et par exemple les eaux de piscine ou d'autres équipements de loisirs aquatiques, en éliminant ses impuretés et particules polluantes.

Le filtre garantit un fluide épuré des particules de tailles diverses, allant de quelques millimètres à quelques micromètres.

Dans le cas de l'eau, il s'agit de retrouver une eau transparente, notamment pour une piscine ou autres équipements aquatiques.

De manière plus générale, un tel filtre est un élément indispensable dans de nombreux procédés et applications, lorsque notamment le fluide à traiter est pollué, soit en raison de son usage (huile de lubrification par exemple), soit en raison de son contact avec le milieu extérieur ce qui est le cas de l'eau de piscine.

Dans le cas spécifique des équipements aquatiques, piscine ou autre, l'eau arrive dans le filtre après être passée dans le ou les skimmers, au sein duquel ou desquels elle subit une première filtration grossière, et éventuellement un préfiltre en général rigide, qui enlèvent les plus grosses impuretés et prévient le filtre d'une saturation trop rapide ou d'une agression par de grosses particules.

Ce sont les impuretés les plus fines qui ont vocation à être récupérées par le filtre. Peu visibles à l'œil nu, ces impuretés sont typiquement constituées de poussières fines, résidus en décomposition, de micro algues. Ces impuretés peuvent troubler l'eau si elles ne sont pas retirées du circuit, voire même la rendre impropre à son usage par décomposition organique. En les retenant, le filtre contribue à lutter contre la salissure des parois et des équipements et à maintenir un milieu propre d'un point de vue bactérien.

De tels filtres sont classiquement constituées d'un corps en non-tissé associé ou non à un préfiltre, par exemple un panier en matière plastique extrudé, dont les ouvertures sont de larges dimensions, typiquement plusieurs millimètres.

Le non-tissé est dans ce cas relativement épais et lourd (typiquement de masse surfacique compris entre 150 et 400 g/m² pour offrir les deux caractéristiques nécessaires :
- définir des orifices de filtration de faibles dimensions, de l'ordre de quelques dizaines de micromètres (typiquement de 12 à 60 micromètres) ;
- présenter des propriétés mécaniques suffisantes afin de résister à la pression de l'eau à la fois lors des cycles d'usage et lors des opérations de dépose pour nettoyage ou remplacement une fois encrassé, et donc s'opposer aux risques de déchirement.

Usuellement, le non-tissé se présente sous la forme d'une poche ouverte à l'une de ses extrémités, et destinée à être fixée en regard de l'arrivée d'eau à traiter. Cette poche est le plus souvent de forme conique, afin de permettre une répartition plus homogène de la pression de filtration sur toute la hauteur de la poche.

La poche peut être équipée dans sa partie supérieure d'un câble ou d'une sangle, notamment élastique, permettant sa fixation sur l'arrivée d'eau ou de fluide à filtrer.

De tels filtres sont décrits dans les brevets EP1108457 et EP4818398. Si, ce type de filtre permet d'aboutir au résultat recherché, à savoir la filtration des eaux, notamment de piscine, avec des résultats satisfaisants, en revanche, il présente un certain nombre d'inconvénients.

Parmi les inconvénients de ces solutions, on peut tout d'abord citer la difficulté à remplacer le filtre, qui une fois encrassé ou colmaté, constitue une poche relativement imperméable, ce qui en fait une réserve d'eau ou de fluide relativement lourde à soulever ou à manutentionner, notamment dans des endroits en général peu accessibles pour ce changement de filtre.

Un autre inconvénient réside dans le nettoyage ou le remplacement du filtre. Cette opération s'effectue le plus souvent sous pression de l'eau, sous l'action d'un jet ou autre méthode, en frottant mécaniquement après retournement de la poche, procédés longs et fastidieux pour nettoyer complètement le filtre.

Une autre difficulté inhérente à l'utilisation de tels filtres réside dans le risque d'une fréquence de nettoyage mal adaptée, liée principalement aux inconvénients précédents, et notamment au caractère malaisé de remplacement ou de nettoyage du filtre. Ce faisant, une telle utilisation inappropriée engendre un dysfonctionnement de l'opération de filtration, susceptible d'entrainer une surcharge pour la pompe, cette dernière subissant des excès de charge importants en raison du filtre encrassé, et pouvant se traduire par des complications ou des pannes (surconsommation électrique, panne de pompe...)

Par ailleurs, les difficultés d'utilisation de ces filtres peuvent entrainer des déchirures qui nécessitent alors le remplacement du filtre.

Enfin, le filtre étant en général réalisé en non-tissé de PET (polyéthylène téréphtalate) ou de PP (polypropylène), la question du recyclage n'est pas résolue autrement que par les circuits de récupération de textiles, encore aléatoires et orientés sur les vêtements pour l'essentiel. Ils terminent donc en décharge ou incinération. Le cycle de vie n'est pas vertueux.

### DESCRIPTION SOMMAIRE DE L'INVENTION

L'invention a pour objectif de concevoir un filtre visant à s'affranchir de ces différents inconvénients, notamment en termes de poids, d'encrassement, de nettoyage et de recyclage et est décrit dans le jeu de revendications 1 à 5.

Elle a donc pour objet un filtre constitué de deux structures en forme de poche, présentant une ouverture destinée à se positionner dans le sens du flux de liquide ou d'eau à filtrer :
- une première structure fine, c'est-à-dire de faible épaisseur, typiquement inférieure à 1 millimètre, voire même inférieure à 0,5 millimètre, et présentant des ouvertures de faibles dimensions (typiquement de 5 à 120 microns), réalisée en non tissé, tissé ou tricot, voire de type papier ou film perforé, et constituée d'un matériau biodégradable ou biocompostable après usage de quelques jours ou semaines au maximum ;
- une seconde structure, apte à recevoir ladite première structure, constituée d'un tricot, dont la résistance mécanique est supérieure à celle de la première structure, notamment en raison de la ténacité du fil et de l'armure choisie;
ladite première structure étant configurée pour être plaquée contre ladite seconde structure en mode opérationnel, sans pour autant être solidarisée à cette dernière.

Ainsi, la faible résistance mécanique de la première structure, dont la fonction première est la filtration proprement dite, est compensée par la présence de la seconde structure contre laquelle elle vient se plaquer en cours d'utilisation sans pour autant être sous tension.

La seconde structure, donc en position externe par rapport à la première structure en mode opérationnel, est constituée d'un textile à ouvertures plus grandes (typiquement comprises entre 0,2 et 2 millimètres).

Idéalement, la première structure est de dimension légèrement supérieure à la seconde structure, afin que ladite première structure se plaque contre ladite seconde structure sans pour autant être sous tension, et donc sans risquer de déchirure. En d'autres termes, la seconde structure garantit un renfort régulier et homogène, sans pour autant être obstructif pour la première structure de filtration.

En synthèse :
- la seconde structure sert de tenue mécanique et résiste à la pression de pompage ; elle a vocation à être positionnée dans le flux le plus proche de la pompe d'aspiration ;
- la première structure constitue la couche de filtration ; elle est amovible et donc interchangeable, et est constituée d'un matériau biodégradable ou biocompostable, tel que par exemple le PLA (acide polylactique), le PBS (polybutylène succinate), le chanvre, le lin, le coton, la cellulose et la jute, ou tout autre matériau ayant ces propriétés.

Les deux structures peuvent être munies de câble ou équivalent positionné au voisinage de leur extrémité ouverte (ouverture), et destiné à assurer leur maintien au niveau d'une pompe d'aspiration ou d'une tubulure aboutissant à une telle pompe.

### BREVE DESCRIPTION DES FIGURES

D'autres caractéristiques et avantages de l'invention ressortiront clairement de la description qui en est faite ci-après, à titre indicatif et nullement limitatif, en référence aux dessins annexés, dans lesquels :
La figure 1 est une représentation schématique en perspective du filtre conforme à l'invention.
La figure 2 est une vue schématique en section du filtre de la figure 1.

### DESCRIPTION DETAILLEE DE L'INVENTION

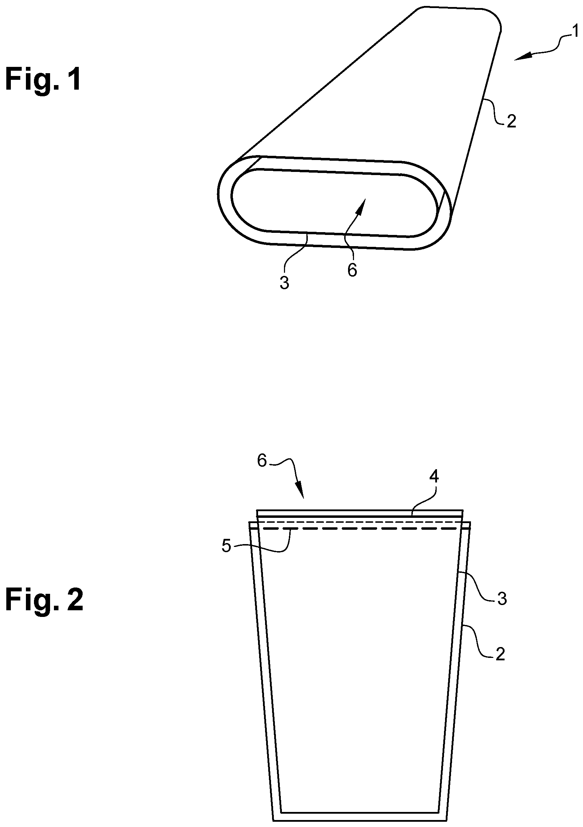

On a schématiquement décrit en relation avec la figure 1, le filtre conforme à l'invention.

Fondamentalement, le filtre (1) est constitué de deux poches (2, 3) fermées à l'une de leur extrémité, et ouverte à l'extrémité opposée. L'ouverture (6) dont sont munies lesdites poches a vocation à permettre le positionnement dudit filtre sur une arrivée (canalisation ou avaloir) d'eau, typiquement en provenance d'une piscine.

La poche externe (2) ou seconde structure, est destinée à constituer en quelque sorte un exosquelette, et de manière générale, une structure de maintien de la poche interne (3) ou première structure, dont la seule fonction est de filtrer l'eau traversant le filtre.

La poche externe (2), en l'espèce forme de trapèze, lorsqu'elle n'est pas déployée, avec la grande base correspondant à l'ouverture (6), est réalisée par tissage ou tricotage (selon la technologie à mailles jetées) de polypropylène ou de PET, ou de tout autre polymère. Le titre des fils mis en œuvre est compris entre 50 et 300 dtex. Elle présente des ouvertures, dont la plus grande dimension est comprise entre 0,2 et 2 millimètres. Elle présente une masse surfacique typiquement comprise entre 30 et 100 g/m².

Selon l'invention, cette poche externe (2) est obtenue par tricotage à mailles jetées réalisée sur un métier de type Rachel à double fonture sans couture longitudinale.

En raison du matériau qui la constitue et de sa structure, cette poche externe (2), également dénommée seconde structure (2), présente une résistance mécanique relativement élevée, et en tout cas adaptée à la pression de l'eau venant s'exercer sur le filtre (1). La structure de cette poche externe est telle qu'elle assure une certaine homogénéité desdites ouvertures qu'elle définit, et corollairement, un support sur lequel la pression exercée par l'eau, et par voie de conséquence sur la poche interne (3) s'exerce également de manière homogène.

La poche interne (3) adopte une forme identique à la poche externe (2). Elle dépasse cependant légèrement de la poche externe (2), typiquement d'une distance comprise entre 0,1 et 1 centimètre, ainsi qu'on bien l'observer sur la figure 2. Et ce, afin de s'assurer qu'elle vient bien plaquer contre ladite poche externe (2) lorsque le flux d'eau à filtrer traverse le filtre.

Cette poche interne (3) est réalisée en non-tissé très léger ou encore en papier ou en un film perforé, typiquement de masse surfacique comprise entre 12 et 150 g/m². Elle définit des ouvertures de petites dimensions, comprise entre 5 et 100 micromètres, et typiquement 15 micromètres, et donc une faible porosité, de telle sorte à assurer la fonction de filtration qui lui est dévolue.

Elle est réalisée en un matériau biodégradable ou biocompostable, tel que par exemple du PLA ou du PBS, voire en matériau naturel, également biodégradable tel que le chanvre, la jute, le coton, la cellulose ou le lin, et dans ce cas, est à usage unique.

Cette poche interne (3) est avantageusement à usage unique. En d'autres termes, lorsqu'elle a rempli sa fonction de filtration, et que partant elle est remplie en tout ou partie de particules retenues par le non-tissé, elle est simplement ôtée hors de la poche externe (2) à laquelle elle n'est pas solidarisée, et remplacée par une nouvelle poche interne.

On conçoit de fait tout l'intérêt de l'invention, qui d'une part, permet d'assurer une filtration optimum des liquides, et notamment des eaux de piscine, et d'autre part, permet le remplacement de la seule poche interne (3) lorsque celle-ci est pleine, par simple escamotage hors de la poche externe (2), sans risque de déchirement de ladite poche interne, et en outre, en respectant les normes environnementales puisque cette dernière est réalisée en matériau bio dégradable ou biocompostable.

Si dans l'exemple décrit, tant la poche externe (2) que la poche interne (3) présentent une forme à plat en trapèze, d'autres formes polyédriques peuvent être envisagées, telles que par exemple conique. Corollairement, une forme rectangulaire à plat peut être envisagée, conférant alors auxdites poches en mode opérationnel une forme cylindrique.

Quelle que soit la forme retenue, l'une des extrémités desdites poches est fermée, par couture ou directement en raison du mode de réalisation desdites poches, et l'autre extrémité est ouverte, afin de permettre au flux d'eau à filtrer de traverser le filtre ainsi constitué.

Afin de permettre la fixation du filtre sur la canalisation d'amenée de l'eau à filtrer, on munit chacune des deux poches d'un câble (4, 5) ou d'un moyen équivalent, venant serrer un bourrelet en saillie ménagé sur ladite canalisation.

## Revendications

1. Filtre (1) constitué de deux structures en forme de poche, présentant une ouverture (6) destinée à se positionner dans le sens du flux de liquide ou d'eau à filtrer, respectivement :
• une première structure ou poche interne (3) présentant des ouvertures de faibles dimensions comprises entre 5 et 120 micromètres, réalisée en un non tissé, un tissu, un tricot, un papier ou un film perforé, et réalisée en un matériau biodégradable ou biocompostable choisi dans le groupe comprenant le PLA (acide polylactique), le PBS (polybutylène succinate), le chanvre, le coton, la cellulose, le lin et la jute,
• une seconde structure ou poche externe (2), apte à recevoir ladite première structure ou poche interne (3), constituée d'un tricot, obtenu par tricotage à mailles jetées réalisée sur un métier de type Rachel à double fonture sans couture longitudinale, et dont la résistance mécanique est supérieure à celle de la première structure ;
ladite première structure étant configurée pour être plaquée contre ladite seconde structure en mode opérationnel, sans pour autant être solidarisée à cette dernière.

2. Filtre (1) selon la revendication 1, ***caractérisé* en ce que** les ouvertures de la seconde structure ou poche externe (2) ont leur plus grande dimension comprise entre 0,2 et 2 millimètres.

3. Filtre (1) selon l'une des revendications 1 et 2, ***caractérisé* en ce que** la première structure ou poche interne (3) est de dimension légèrement supérieure à la seconde structure ou poche externe (2).

4. Filtre (1) selon l'une des revendications 1 à 3, ***caractérisé* en ce que** les deux structures (2, 3) sont chacune munie d'un câble (4, 5) ou équivalent positionné au voisinage de leur extrémité ouverte (6), et destiné à assurer leur maintien au niveau d'une pompe d'aspiration ou d'une tubulure aboutissant à une telle pompe.

5. Filtre (1) selon l'une des revendications 1 à 4, ***caractérisé* en ce que** l'épaisseur de la première structure ou poche interne (3) est inférieure à 1 millimètre.

## Patentansprüche

1. Filter (1), bestehend aus zwei taschenförmigen Strukturen, jeweils mit einer Öffnung (6), die dazu dient, in Strömungsrichtung der zu filternden Flüssigkeit bzw. des zu filternden Wassers positioniert zu werden:
• eine erste innere Struktur oder Tasche (3) mit klein dimensionierten Öffnungen zwischen 5 und 120 Mikrometern, die aus einem Vliesstoff, einem Gewebe, einem Gewirke, einem Papier oder einer perforierten Folie besteht und aus einem biologisch abbaubaren oder biologisch kompostierbaren Material hergestellt ist, das aus der Gruppe ausgewählt ist, die PLA (Polymilchsäure), PBS (Polybutylensuccinat), Hanf, Baumwolle, Zellulose, Leinen und Jute umfasst,
• eine zweite äußere Struktur oder Tasche (2), die die erste innere Struktur oder Tasche (3) aufnehmen kann, bestehend aus einem Gewirke, das durch Kettenwirkverfahren auf einer Doppelbett-Raschelmaschine ohne Längsnaht hergestellt ist und dessen mechanische Festigkeit größer ist als die der ersten Struktur;
wobei die erste Struktur so konfiguriert ist, dass sie im Betriebsmodus gegen die zweite Struktur gedrückt wird, ohne jedoch mit dieser fest verbunden zu sein.

2. Filter (1) nach Anspruch 1, **dadurch gekennzeichnet, dass** die Öffnungen der zweiten äußeren Struktur oder Tasche (2) in ihrer größten Dimension zwischen 0,2 und 2 Millimetern liegen.

3. Filter (1) nach einem der Ansprüche 1 und 2, **dadurch gekennzeichnet, dass** die erste innere Struktur oder Tasche (3) etwas größer dimensioniert ist als die zweite äußere Struktur oder Tasche (2).

4. Filter (1) nach einem der Ansprüche 1 bis 3, **dadurch gekennzeichnet, dass** die beiden Strukturen (2, 3) jeweils mit einem Kabel (4, 5) oder gleichwertigem Element versehen sind, das in der Nähe ihres offenen Endes (6) positioniert ist und dazu dient, ihren Halt an einer Saugpumpe oder einem zu einer solchen Pumpe führenden Stutzen zu gewährleisten.

5. Filter (1) nach einem der Ansprüche 1 und 4, **dadurch gekennzeichnet, dass** die Dicke der ersten inneren Struktur oder Tasche (3) weniger als 1 Millimeter beträgt.

## Claims

1. A filter (1) comprising two pouch-shaped structures, having an opening (6) intended to be positioned in the direction of the flow of liquid or water to be filtered, respectively:
• a first structure or inner pouch (3) having small dimension openings of between 5 and 120 micrometres, made of a non-woven, a fabric, a knit, a paper, or a perforated film, and made of a biodegradable or biocompostable material selected from the group comprising PLA (polylactic acid), PBS (polybutylene succinate), hemp, cotton, cellulose, flax, and jute,
• a second structure or outer pouch (2), able to receive said first structure or inner pouch (3), consisting of a knit, obtained by warp stitch knitting carried out on a Rachel type machine with double needle bed without longitudinal sewing, and the mechanical strength of which is greater than that of the first structure;
said first structure being configured to be pressed against said second structure in operational mode, without being secured thereto.

2. The filter (1) according to claim 1, **characterised in that** the openings in the second structure or outer pouch (2) have their largest dimension in the range 0.2 to 2 millimetres.

3. The filter (1) according to claims 1 and 2, **characterised in that** the first structure or inner pouch (3) is slightly larger than the second structure or outer pouch (2).

4. The filter (1) according to any one of claims 1 to 3, **characterised in that** the two structures (2, 3) are each provided with a cable (4, 5) or equivalent positioned in the vicinity of their open end (6), and intended to hold them at a suction pump or a tubing leading to such a pump.

5. The filter (1) according to any one of claims 1 to 4, **characterised in that** the thickness of the first structure or inner pocket (3) is less than 1 millimetre.
